**Europäisches Patentamt**

**European Patent Office**

**Office européen des brevets**

(19)

(11) Veröffentlichungsnummer: **0 131 882**
**A1**

(12) # EUROPÄISCHE PATENTANMELDUNG

(21) Anmeldenummer: **84108013.8**

(22) Anmeldetag: **09.07.84**

(51) Int. Cl.⁴: **B 60 V 1/00**

(30) Priorität: **16.07.83 DE 8320596 U**

(43) Veröffentlichungstag der Anmeldung:
**23.01.85 Patentblatt 85/4**

(84) Benannte Vertragsstaaten:
**FR GB NL SE**

(71) Anmelder: **Vetter Produktions-GmbH**
**Blatzheimer Strasse Postfach 12 60**
**D-5352 Zülpich(DE)**

(72) Erfinder: **Vetter, Manfred**
**Burg Langendorf**
**D-5352 Zülpich(DE)**

(74) Vertreter: **Bauer, Wulf, Dr.**
**Wolfgang-Müller-Strasse 12**
**D-5000 Köln 51 (Marienburg)(DE)**

(54) **Luftkissenfahrzeug.**

(57) Das Luftkissenfahrzeug hat einen Fahrzeugkörper (20), an dem mindestens ein Motor und ein von diesem Motor angetriebener Rotor (32) angeordnet sind. Die Drehachse des Rotors (32) verläuft im wesentlichen parallel zur Fahrzeugebene. An der Druckseite des Rotors (32) befindet sich ein axialer Einlaß (38) eines Luftkanals, dessen Auslaß mit dem nach unten offenen Raum unterhalb des Fahrzeugkörpers (20) kommuniziert.

Der Einlaß (38) ist kreisringförmig ausgebildet, sein äußerer Rand hat im wesentlichen denselben Durchmesser wie der Außendurchmesser des Rotors (32). Weiterhin ist der Fahrzeugkörper (20) aus einer Oberschale (22) und einer Unterschale (24) aufgebaut, die lösbar am Außenrand des Fahrzeugkörpers (20) miteinander verbunden sind.

FIG. 2

EP 0 131 882 A1

DR. RER. NAT. WULF BAUER
PATENTANWALT

WOLFGANG-MÜLLER-STRASSE 12
D-5000 KÖLN 51 (MARIENBURG)
V2 2/83 EPA

**0131882**

Anmelder:    Firma Vetter Produktions-GmbH in 5352 Zülpich

Bezeichnung: Luftkissenfahrzeug

---

Die Erfindung betrifft ein Luftkissenfahrzeug mit einem Fahrzeugkörper, an dem mindestens ein Motor und ein von dem Motor antreibbarer Rotor angeordnet sind, dessen Rotordrehachse im wesentlichen parallel zu einer Fahrzeugebene verläuft und an dessen Druckseite sich ein axialer Einlaß eines Luftkanals befindet, der kreisringförmig ausgebildet ist, dessen äußerer Rand im wesentlichen denselben Durchmesser hat wie der Außendurchmesser des Rotors und dessen Auslaß mit dem nach unten offenen Raum unterhalb des Fahrzeugkörpers kommuniziert.

Ein derartiges Luftkissenfahrzeug ist aus der GB-PS 1 306 687 bekannt, das vorbekannte Luftkissenfahrzeug ist für eine größere Anzahl von Passagieren ausgelegt. Bei dem vorbekannten Luftkissenfahrzeug wird mit mehreren Rotoren jeweils sowohl ein Tragluftkissen als auch ein für die Fortbewegung dienender Luftstrom erzeugt. Dabei wird für den Auftrieb derjenige Anteil der vom Rotor erzeugten Luftströmung genutzt, der durch den kreisringförmigen, axialen Einlaß des Luftkanals strömt. Diese Luft hat im allgemeinen die höchste Strömungsgeschwindigkeit. Der zentrale, im Querschnitt kreisförmige Anteil der Luftströmung dient dem Vortrieb.

- 2 -

Aufgabe der vorliegenden Erfindung ist es, ein kleineres, mit maximal zwei Motoren, vorzugsweise einem Motor angetriebenes Luftkissenfahrzeug zu schaffen, das eine einfache, stabile Konstruktion ermöglicht, eine günstige Ausbildung des Tragluftkissens zuläßt, mit einfachen Mitteln einen stabilen Aufbau des Fahrzeugkörpers ermöglicht und die Durchführung von Wartungsarbeiten, Reparaturen oder Inspektionen erleichtert.

Diese Aufgabe wird ausgehend von dem bekannten Luftkissenfahrzeug dadurch gelöst, daß der Fahrzeugkörper aus einer Oberschale und einer Unterschale aufgebaut ist, die am Außenrand des Fahrzeugkörpers miteinander auf der Fahrzeugebene lösbar verbunden sind.

Die Verbindung erfolgt dabei über den gesamten Umfang des Außenrandes des Fahrzeugkörpers. Der zweischalige Aufbau ermöglicht es, jederzeit die beiden Schalen zu trennen, so daß Wartungsarbeiten, Reparaturen oder Inspektionen vereinfacht werden. Darüberhinaus kann die Oberschale so geformt werden, wie es für den praktischen Einsatz, insbesondere den meist nur einen Passagier am günstigsten ist, ohne daß bei der Formgebung der Oberschale Rücksicht genommen werden muß auf die Ausbildung des Luftkissens. Die Unterschale wiederum kann in ihrer Form so ausgeführt werden, daß ein optimaler Raum für ein Luftkissen erzielt wird. Dabei muß keine Rücksicht genommen werden auf sonstige Anforderungen, zum Beispiel Anordnung eines Fahrersitzes, des Motors oder dergleichen. Weiterhin kann der Zwischenraum zwischen Oberschale und Unterschale so ausgebildet und optimiert werden, wie es für eine Verteilung der Tragluft am günstigsten ist. Unterschale und Oberschale sind auf einer vorzugsweise horizontal verlaufenden Ebene miteinander verbunden.

Das erfindungsgemäße Luftkissenfahrzeug ist insbesondere für Rettungszwecke ausgelegt. Die zweischalige Konstruktion ergibt einen sehr einfachen, leichten aber dennoch formsteifen Fahrzeugkörper. Die Konstruktion eignet sich auch für Sportzwecke, beispielsweise für Luftkissenfahrzeuge der Formel S.

Als besonders vorteilhaft hat sich ein Schwert erwiesen, das zwischen einer eingezogenen Position, in der es mit seiner Unterkante nicht unterhalb des Fahrzeugbogens vorsteht, und einer ausgefahrenen Position bewegbar ist, in der es um mindestens das Maß der Bodenfreiheit des Luftkissenfahrzeugs gegenüber dem Fahrzeugboden nach unten hervorragt. Wird ein derartiges Schwert seitlich angeordnet, insbesondere seitlich des Massenmittelpunkts des Fahrzeugs, so können mit dem Luftkissenfahrzeug dadurch wesentlich engere Kurven gefahren werden, wenn das Schwert an derjenigen Seite des Fahrzeugs, zu der hin man wenden will, nach unten in die ausgefahrene Position gedrückt wird. Es schleift dadurch - je nach Untergrund, über dem sich das Luftkissenfahrzeug befindet -, auf dem Boden oder taucht in Wasser ein und bewirkt somit eine einseitige Abbremsung des Luftkissenfahrzeugs, mithin eine wesentlich bessere Manövrierbarkeit. Schließlich ist ein mittiges Schwert oder sind zwei gleichzeitig bediente Seitenschwerter besonders vorteilhaft für eine möglichst rasche Abbremsung des Luftkissenfahrzeugs.

Schließlich haben sich Auftriebskörper am Luftkissenfahrzeug besonders bewährt, da durch sie ein Sinken des Fahrzeugs verhindert wird. Bei der bevorzugten, zweischaligen Ausbildung, lassen sich die Auftriebskörper besonders günstig und versteckt anordnen, sie können dabei zugleich die Luftkanäle begrenzen, die die im hinteren Bereich des Fahrzeugs nach unten strömende Antriebsluft über die gesamte
Fahrzeugfläche verteilen, insbesondere nach vorne leiten.

Weitere Vorteile und Merkmale der Erfindung ergeben sich
aus den übrigen Ansprüchen sowie der nun folgenden Beschreibung eines nicht einschränkend zu verstehenden Ausführungsbeispels, das im folgenden unter Bezugnahme auf die Zeichnung näher erläutert wird. Diese zeigt in

Fig. 1     eine Seitenansicht eines Fahrzeugkörpers eines
           Luftkissenfahrzeugs,
Fig. 2     eine Draufsicht auf das Fahrzeug gemäß Figur 1,
           entlang der Linie II-II in Figur 1,
Fig. 3     eine Rückansicht des Luftkissenfahrzeugs gemäß

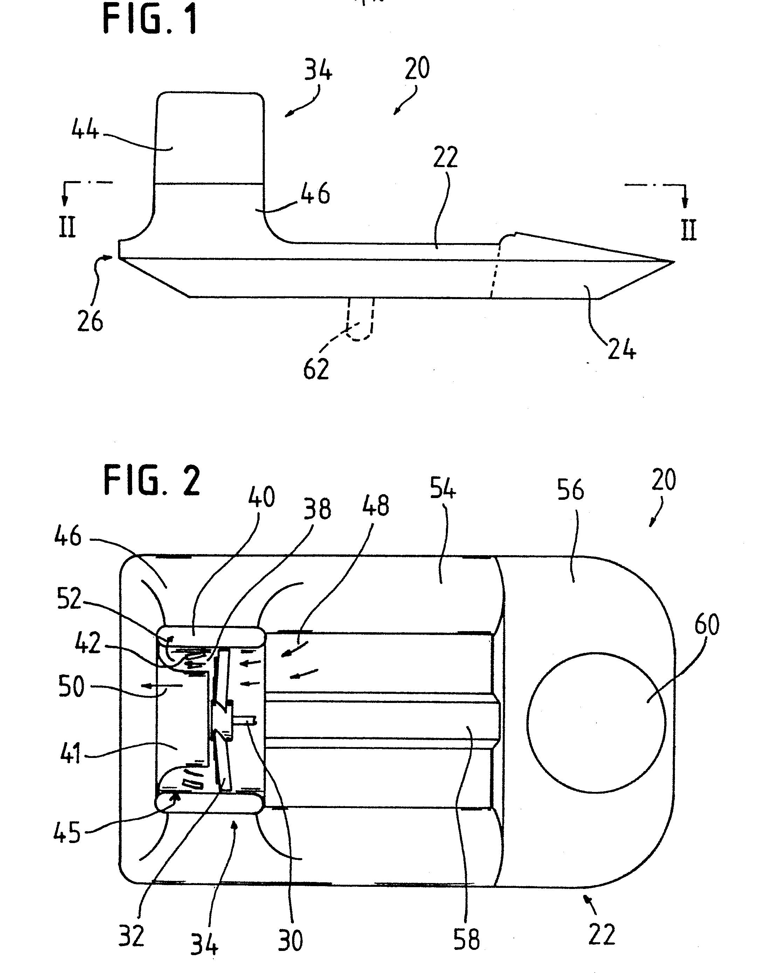

           Figur 1 und

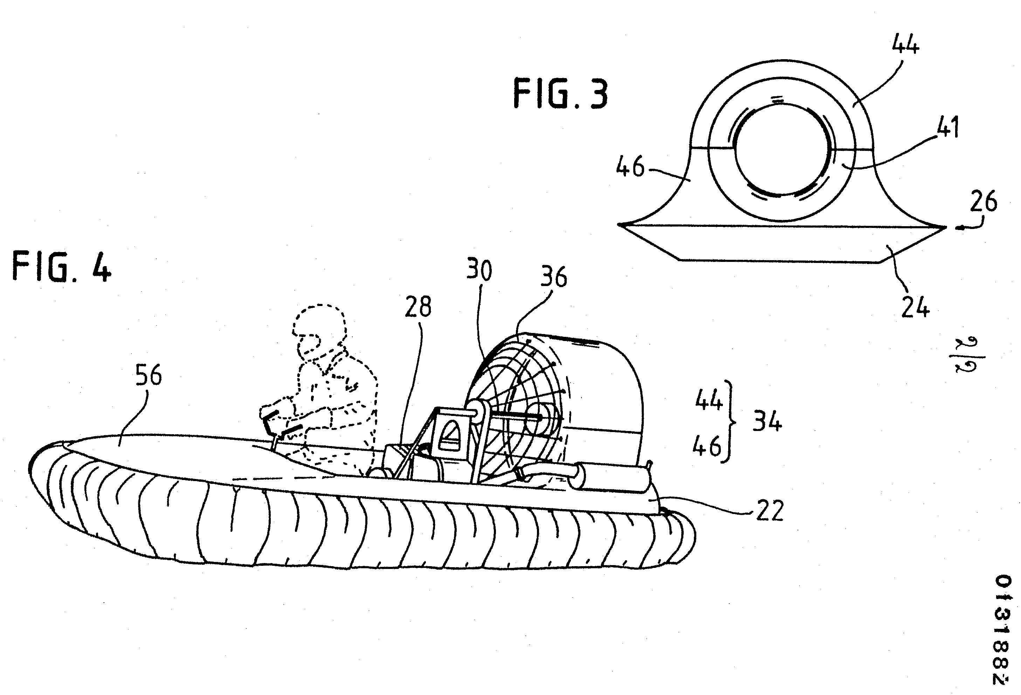

Fig. 4     eine perspektivische Darstellung eines kompletten,
           im Betrieb befindlichen Luftkissenfahrzeugs.

Das Luftkissenfahrzeug hat einen in den Figuren 1 bis 3
dargestellten Fahrzeugkörper 20, der im wesentlichen aus
einer Oberschale 22 und einer Unterschale 24 zusammengesetzt ist. Diese beiden Schalen 22, 24 sind auf einer Ebene 26, der Fahrzeugebene, lösbar mittels Schrauben und
Muttern miteinander verbunden. Beide Schalen 22, 24 sind
aus glasfaserverstärktem Kunststoff gefertigt und haben
eine Wanddicke von wenigen Millimetern.

Auf der Oberschale sitzt etwas hinter dem geometrischen Mittelpunkt ein Motor 28 mit fünfzig PS Leistung, der über eine
Welle 30 einen Rotor 32 mit mehreren, axial verdichtenden
Schaufelblättern antreibt. Die Welle 30 und damit die Rotordrehachse verlaufen in der Fahrzeuglängsmitte und im wesentlichen parallel zur Fahrzeugebene 26. Der Rotor 32 ist von einem gleichachsigen, zylindrischen und doppelwandigen Rotorgehäuse 34 umgeben und befindet sich in Axialrichtung dieses Rotorgehäuses 34 gesehen in dessen Längsmitte. Rotor 32 und Rotorgehäuse 34 bilden zusammen einen Axialverdichter, der oberhalb des Motors 28 durch ein Schutzgitter 36 Luft ansaugt und verdichtete Luft axial nach hinten ausstößt.

Diese verdichtete Luft strömt einerseits in einen kreisringförmigen, axialen Einlaß 38 eines Luftkanals 40, der nach unten hin offen ist und in die Unterseite der Unterschale 24 mündet. Dieser Anteil bewirkt ein Luftkissen unterhalb der Unterschale 24. Der Einlaß 38 wird außenseitig begrenzt durch die Innenwand des Rotorgehäuses 34, nach innen hin wird er begrenzt durch einen Ring 41, der sich nach hinten zunehmend weiter öffnet und als Diffusor wirkt. Hinter dem ringförmigen Einlaß 38 sind stationäre Leitschaufeln 42 an der Innenwand des Rotorgehäuses 34 befestigt. Sie sind so gekrümmt, daß sie die zirkulare Strömungskomponente der verdichteten Luft hinter dem Rotor 32 eliminieren. Wie Figur 2 zeigt, ist der Außendurchmesser des Rotors 32 nur unwesentlich kleiner als der Innendurchmesser des Rotorgehäuses 34.

Das Rotorgehäuse 34 besteht aus zwei Halbschalen, die sich über jeweils 180° erstrecken und auf einer Ebene, in der die Welle 30 liegt und die parallel zur Fahrzeugebene 26 verläuft, miteinander verbunden sind, nämlich ein oberes, halbzylindrisches Teilstück 44 und ein unteres Teilstück 46, das einstückig mit der Oberschale 22 verbunden ist und stetig und weich auslaufend in die allgemeine Kontur der Oberschale 22 übergeht. Auch das obere Teilstück ist aus glasfaserverstärktem Kunststoff gefertigt.

In Figur 2 ist der Strömungsverlauf im Bereich des Rotors 32 durch Pfeile 48 bis 52 verdeutlicht. Angesaugte Luft (Pfeile 48) wird axial verdichtet und bewirkt als innenliegende, durch einen Kreisquerschnitt hindurchtretende Strömung (Pfeil 50) den Vortrieb, während der durch den im Durchtrittsquerschnitt ringförmigen Einlaß 38 strömende Luftanteil in den hohlen, Luftkanäle 40 bildenden Innenraum des Rotorgehäuses 34 und von dort zur Unterfläche des Fahrzeugkörpers 20 gelangt (Pfeil 52).

Die Oberschale 22 ist durch seitliche Wülste 54, die vorn in einen Bugteil 56 übergehen, sowie durch eine Mittelrippe 58 versteift. Weiterhin bewirkt das untere Teilstück 46 eine Formaussteifung etc. der Oberschale 22. Im Bugteil 56 ist eine Haltefläche 60 für einen zweiten, lediglich einen Auftrieb bewirkenden Motor vorgesehen.

Etwa unterhalb der Mitte der seitlichen Wülste 54 ist am Boden der Unterschale 24 auf jeder Fahrzeugseite jeweils ein Schwert 62 schwenkbar gelagert, das mittels eines Seilzugs und separat vom jeweils anderen Schwert 62 einerseits in eine eingezogene Ruheposition, in der es nicht gegenüber der Unterschale 24 nach unten vorsteht, einziehbar und in eine ausgefahrene Position ausschwenkbar ist, in der das Schwert 62 soweit nach unten vorsteht, daß es auch bei fahrendem Luftkissenfahrzeug den Boden berührt oder in Wasser eintauchen kann. Die Schwerter 62 sind elastisch aus Kautschuk ausgeführt. Die Verbindungslinie der beiden Schwerter 62 verläuft durch den Massenmittelpunkt des Luftkissenfahrzeugs.

Besonders bewährt haben sich Schwerter 62, insbesondere seitliche Schwerter 62 zur Vermeidung von Abdrift des Luftkissenfahrzeugs in Wasser.

Anmelder: Firma Vetter Produktions-GmbH in 5352 Zülpich

Bezeichnung: Luftkissenfahrzeug

Ansprüche

1. Luftkissenfahrzeug mit einem Fahrzeugkörper (20), an dem mindestens ein Motor (28) und ein von dem Motor (28) antreibbarer Rotor (32) angeordnet sind, dessen Rotordrehachse im wesentlichen parallel zu einer Fahrzeugebene (26) verläuft und an dessen Druckseite sich ein axialer Einlaß (38) eines Luftkanals (40) befindet, der kreisringförmig ausgebildet ist, dessen äußerer Rand im wesentlichen denselben Durchmesser hat wie der Außendurchmesser des Rotors (32) und dessen Auslaß mit dem nach unten offenen Raum unterhalb des Fahrzeugkörpers kommuniziert, d a d u r c h g e k e n n z e i c h n e t, daß der Fahrzeugkörper (20) aus einer Oberschale (22) und einer Unterschale (24) aufgebaut ist, die am Außenrand des Fahrzeugkörpers (20) miteinander auf der Fahrzeugebene (26) lösbar verbunden sind.

2. Luftkissenfahrzeug nach Anspruch 1, dadurch gekennzeichnet, daß der Rotor (32) von einem gleichachsigen, zylindrischen, doppelwandigen Rotorgehäuse (34) umgeben ist, und daß das Rotorgehäuse (34) aus einem unteren Teilstück (46) und einem oberen Teilstück (44) zusammengesetzt ist, die auf einer parallel zur Fahrzeugebene (26) und durch die Welle (30) verlaufenden Verbindungsebene miteinander verbunden sind, wobei das untere Teilstück (46) einstückig mit der Oberschale (22) ausgebildet ist.

3. Luftkissenfahrzeug nach Anspruch 1 oder 2, dadurch gekennzeichnet, daß der Einlaß (38) durch den Innenmantel des Rotorgehäuses (34) und ein hierzu konzentrisches, hinten zum Innenmantel gebogenes und im Durchmesser kleineres Innenrohrstück (41) begrenzt wird, daß der Innenmantel im Bereich der Überdeckung durch dieses Innenrohrstück (41) radiale Eintrittsöffnungen (45) aufweist, und daß an der Innenwand des Innenmantels oder an der Außenwand des Innenrohrstücks (41) feststehende, in Gegenrichtung zu den Schaufeln des Rotors (32) gebogene Leitschaufeln (42) befestigt sind.

4. Luftkissenfahrzeug nach einem der Ansprüche 1 bis 3, dadurch gekennzeichnet, daß der Innenraum des Rotorgehäuses (34) den Luftkanal (40) bildet und zur Unterseite der Unterschale (24) offen ist.

5. Luftkissenfahrzeug nach einem der Ansprüche 1 bis 4, gekennzeichnet durch maximal zwei Motoren (28) und insbesondere durch einen zweiten Rotor mit vertikaler, quer zur Fahrzeugebene (26) verlaufender Drehachse, dem ein im Bereich einer Haltefläche (60) befestigter zweiter Motor zugeordnet ist.

6. Luftkissenfahrzeug nach einem der Ansprüche 1 bis 5, gekennzeichnet durch mindestens ein Schwert (62), das zwischen einer eingezogenen Ruheposition, in der es mit seiner Unterkante nicht unterhalb des Fahrzeugbodens vorsteht und einer ausgefahrenen Position, in der es um mindestens das Maß der Bodenfreiheit des Luftkissenfahrzeugs gegenüber dem Fahrzeugboden nach unten vorragt, bewegbar ist.

7. Luftkissenfahrzeug nach Anspruch 6, dadurch gekennzeichnet, daß auf beiden Fahrzeugseiten und querab des Massenmittelpunktes des Luftkissenfahrzeugs jeweils ein seitliches Schwert (62) vorgesehen ist.

8. Luftkissenfahrzeug nach Anspruch 5 oder 6, dadurch gekennzeichnet, daß unterhalb der Fahrzeugmitte eine als Bremse dienendes Schwert (62) vorgesehen ist.

9. Luftkissenfahrzeug nach einem der Ansprüche 5 bis 8, dadurch gekennzeichnet, daß die Schwerter (62) elastisch nachgebend ausgeführt sind.

10. Luftkissenfahrzeug nach einem der Ansprüche 1 bis 9, gekennzeichnet durch Auftriebskörper, die vorzugsweise zwischen Oberschale (22) und Unterschale (24) angeordnet sind und Luftführungskanäle begrenzen.

0131882

**FIG. 1**

**FIG. 2**

# FIG. 3

44

41

46

26

24

# FIG. 4

56

28

30

36

44
46
} 34

22

Europäisches
Patentamt

**EUROPÄISCHER RECHERCHENBERICHT**

**0131882**

Nummer der Anmeldung

EP  84 10 8013

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
|---|---|---|---|
| X | US-A-3 685 607 (EGLEN) * Spalte 2, Zeilen 4-7; Spalte 5, Zeilen 13-20 * | 1 | B 60 V 1/00 |
| X | US-A-3 583 520 (KIRPITZNIKOFF) * Spalte 1, Zeilen 24-39; Spalte 3, Zeilen 23-27 * | 1,5,6 | |
| A | US-A-3 398 809 (WOOD) * Spalte 5, Zeilen 12-20 * | 4 | |
| A | US-A-3 777 842 (LAUFMAN) * Spalte 3, Zeilen 47-50 * | 10 | |
| A | FR-A-1 591 011 (ELLIOTT BROTHERS) * Seite 2, Zeilen 13-16 * | 6,7 | RECHERCHIERTE SACHGEBIETE (Int Cl ³) |
| A | US-A-3 837 314 (CREWE) * Spalte 3, Zeile 46 - Spalte 4, Zeile 3 * | 6,7 | B 60 V |
| A | FR-A-2 111 989 (MARTIN) * Seite 2, Zeile 19 - Seite 3, Zeile 17 * | 8 | |
| A | GB-A-2 091 659 (TRANS HOVER LTD.) | | |

Der vorliegende Recherchenbericht wurde für alle Patentansprüche erstellt.

| Recherchenort | Abschlußdatum der Recherche | Prüfer |
|---|---|---|
| DEN HAAG | 22-10-1984 | HAUGLUSTAINE H.P.M. |